# EUROPÄISCHE PATENTANMELDUNG

(11) **EP 2 698 358 A1**
(43) Veröffentlichungstag der Anmeldung: **19.02.2014**
(21) Anmeldenummer: 13180025.2
(22) Anmeldetag: 12.08.2013
(51) Int. Cl.: C04B 35/44, C04B 38/08

(54) **Wärmedämmstoffformkörper**

(30) Priorität: 13.08.2012 DE 202012103050 U
(71) Anmelder: PROMAT GmbH, 40878 Ratingen (DE)
(72) Erfinder: Krasselt, Volker, Ratingen (DE); Feulner, Hans-joachim, Essen (DE); Rank, Jürgen, Oberschöna (DE); Melzer, Dieter, Freiberg (DE)
(74) Vertreter: Ring & Weisbrodt

(57) **Zusammenfassung**

Die vorliegende Erfindung betrifft einen Wärmedämmstoffformkörper, erhältlich durch Erzeugen einer anorganischen Feststoffmischung aus einer anorganischen Erdalkalimetall-Verbindung, mindestens einer anorganischen Aluminium-Verbindung und wenigstens einem Porenbildner und Wasser, wobei das molare Verhältnis der Erdalkalimetall-Verbindung zu der Aluminium-Verbindung bezogen auf das Endprodukt 3:1 bis 1:6 beträgt, Überführen der Mischung in eine Form und Aushärtenlassen zum Erhalt eines Grünlings und Brennen des Grünlings bei einer Temperatur von wenigstens 1200°C.

## Beschreibung

Die Erfindung betrifft einen Wärmedämmstoffformkörper, erhältlich durch Erzeugen einer Mischung aus einem anorganischen Bindemittel und wenigstens einem Porenbildner. Die Erfindung betrifft zudem einen Feuerleichtstein, der aus einem solchen Wärmedämmstoffformkörper besteht oder hieraus erhältlich ist.

Wärmedämmstoffformkörper der vorbezeichneten Art sind aus dem Stand der Technik in verschiedenartigen Ausgestaltungen bekannt. Diese enthalten in der Regel Aluminiumsilikate mit einem Gehalt an Aluminiumoxid von typischerweise 30 bis 85 Gew.-%. Hierbei wird in der mineralischen Phase des Wärmedämmstoffformkörpers eine Ausbildung der Mineralphase Mullit aufgrund ihrer hohen Feuerfestigkeit, ihrer geringen Wärmeausdehnung und niedrigen Wärmeleitfähigkeit angestrebt. Derartige Systeme sind beispielsweise aus DE 11 92 574 oder DE 43 26 615 bekannt.

Weiterhin ist es aus dem Stand der Technik bekannt, eine Mischung von Calciumoxid und Aluminiumsilikaten für die Herstellung der vorgenannten Wärmedämmstoffformkörper zu verwenden. Hierdurch kann sich in der Mineralphase Anorthit ausbilden, welches sich durch eine vergleichsweise gute Alkalibeständigkeit auszeichnet. Solche Systeme sind beispielsweise aus US 2,242,434 und aus WO 2011/066842 A1 bekannt.

In der DE 41 35 441 A1 ist ein Rohmaterial aus einer Mischung enthaltend 15 - 25 % eines Tons oder Tonminerals, 20 - 50 % Schamotte und 20 - 50 % eines Porosiermittels beschrieben, welches einem Formgebungs- und anschließenden Trocknungsprozesses, danach einer langsamen Erhitzung und einem keramischen Brand unterzogen wird. Dabei ist eine langsame Aufheizrate im Temperaturbereich zwischen etwa 700° C und etwa 1.000° C von maximal 250 K pro Stunde einzuhalten. Die so erhaltenen Feuerleichtsteine besitzen nur eine mäßige Isolationswirkung. Außerdem wirkt sich die langsame Aufheizrate nachteilig auf die Produktionsgeschwindigkeit aus.

Aus der EP 0 595 543 A1 ist eine Zusammensetzung zur Herstellung eines Feuerleichtsteins beschrieben, welche 55 - 95 Gew-% eines Tonminerals, sowie jeweils 0 - 45 Gew.-% an Quarz, Feldspat sowie Glimmer enthält, wobei wenigstens 5 Gew.-% der Zusammensetzung aus Glimmer und/oder Feldspat besteht. Bei der Herstellung werden die zuvor genannten Ausgangsstoffe in einer Wasservorlage homogenisiert, die auf diese Weise erhaltene Mischung mit einem organischen Schaum auf ein vorgegebenes Litergewicht gebracht und dann in Gießformen abgegossen. Die auf diese Weise hergestellten Rohlinge werden anschließend getrocknet, gebrannt und schließlich auf das erforderliche Maß zugeschnitten. Solche Steine besitzen zwar eine geringe Wärmeleitfähigkeit und damit gute Isolationseigenschaften, weisen jedoch eine geringe Druckfestigkeit und auch einen geringen Widerstand gegen Temperaturwechselbeanspruchung auf, was in einigen Anwendungsbereichen Nachteile mit sich bringt.

Aus der WO 03/008357 ist eine Schaumkeramik mit gerichteter Porenstruktur bekannt, welche aus einer keramischen Masse auf Aluminiumoxid-/Silikatbasis und/oder Carbidbasis und/oder Zirkonoxid-Basis und/oder Hydroxylapatitbasis aufgebaut ist. Bei der Herstellung von Feuerleichsteinen aus diesen Materialien wird in der Weise vorgegangen, dass eine gerichtete, offene oder geschlossene Porenstruktur erhalten wird. Das Herstellverfahren ist aufwendig und komplex, so dass bislang keine bekannte praktische Umsetzung dieses Verfahrens bekannt ist.

Aus der US 3,297,801 sind isolierende Feuerfeststeine bekannt, welche aus einer Mischung aus Ton, Gips, Sägemehl sowie Schamotte zusammengesetzt sind. Bei der Herstellung werden diese Komponenten mit Ausnahme von Gips zunächst mit Wasser zu einem Gießschlicker verarbeitet, dem anschließend der Gips zugegeben wird, dann in Formen gegossen und ausgehärtet wird. Nachteilig bei solchen Steinen ist deren hoher Anteil an Quarz, insbesondere an Cristobalit, welches als potentiell karzinogen eingestuft wird. Diese Substanzen können beim Schneiden freigesetzt werden und beim Einatmen durch das Bedienpersonal Gesundheitsschäden hervorrufen.

Aus der DE 10 2005 052 380 B4 ist ein Aluminat-Wärmedämmstoff als Formkörper und ein Verfahren für seine Herstellung bekannt. Der Aluminat-Wärmedämmstoff besteht aus hochporösem Alkali-β-Aluminat oder einer entsprechenden autoklavierten Vorstufe desselben. Alkali-β-Aluminat hat einen außerordentlich hohen Anteil von teurem Aluminiumoxid und zu einem Teil Alkalioxid, wie beispielsweise in Na₂O·11 Al₂O₃.

Um in den Wärmedämmstoffformkörpern eine Porenstruktur zu erzeugen, ist es zudem aus den vorgenannten Druckschriften bekannt, Ausbrennstoffe, wie Holzmehl, geblähte Polystyrolkügelchen oder Cellulose zu verwenden. Mit Hilfe organischer Schaummittel werden zudem feine Luftblasen in den Rohschlicker eingebracht oder gasbildende Substanzen zugegeben, wie in DD 299222 oder DD 268353 offenbart. Die so porosierte Masse wird zu Rohlingen geformt, getrocknet, gebrannt und danach zu Formsteinen oder Formplatten zugeschnitten.

Aus der DE 20 55 024 A1 sind weiterhin verschiedene Verfahren zur Herstellung von feuerfesten und gegen alkalische Atmosphären widerstandsfähigen Alkalialuminaten bekannt. Konkret beschrieben wird ein Natrium-Aluminat, das wegen seiner lonenleitfähigkeit als Batterie und Akkumulatorwerkstoff genutzt wird. Die Herstellungsverfahren beruhen auf einer Homogenisierung einer Mischung der Oxide oder Hydroxide der Ausgangsstoffe, vorzugsweise in stöchiometrischer Mischung entsprechend MₓO_{y}·11 Al₂O₃ mit x = 1 oder 2; y = 1 oder 3, wobei M ein Alkalimetall ist, und auf einer anschließenden Sinterung bei Temperaturen bis 1600°C oder höher. Dabei entsteht ein sehr dichtes, als Wärmedämmung ungeeignetes Sintermaterial - die Dichte beträgt etwa 3,2 g/cm³ - indem die Ausgangsmischung von Natrium- und Aluminiumausgangsstoffen zahlreiche Zwischenstufen durchläuft und dabei in verschiedenen Formen und Übergangsstufen auftritt. Störungen treten dabei u. U. durch die Bildung von mAl₂O₃ oder NaAlO₂ Kristallkeimen auf, die später, insbesondere bei Temperaturwechselbelastungen, zu fortschreitenden Rissen im Sinterkörper und bei mechanischer Belastung zum Zerfall führen. Insbesondere eine Wanderung der Natriumionen aus dem Inneren in die Randzone führt zu einem Konzentrationsgefälle und damit zu einer ungleichen Kristallbildung und Phasenausbildung im Sinterkörper.

Ein weiterer Aluminat-Wärmedämmstoff ist unter der Marke Calutherm® bekannt. Hierbei handelt es sich um ein poröses Calcium-Aluminat auf der Basis von Hibonit, dem CaAl₁₂O₁₉, das der Leitung von NE-Metallschmelzen dient, insbesondere in Form von Formteilen wie Rinnen, Rohren und Ringen. Die Herstellung der porösen Formteile erfolgt durch eine Autoklavierung einer Aufschlämmung aus entsprechenden Oxiden, Hydroxiden oder dgl. und anschließende Trocknung. Derartige Materialien können bis 1500°C eingesetzt werden, haben aber keine Beständigkeit gegen solche alkalihaltigen Verbrennungsgase, die in Feuerungsanlagen, insbesondere bei einer Abfallverbrennung oder Zementherstellung anfallen, da sie mit den Alkalioxiden Verbindungen eingehen, die eine wesentliche Volumenvergrößerung verursachen, so dass das Gefüge rissig bis vollständig zerstört wird.

Die vorgenannten Systeme und Verfahren haben den Nachteil, dass die Beständigkeit der hierbei erhältlichen Wärmedämmstoffformkörper gegen reduzierende Gasumgebungen sowie Alkalien für verschiedene Anwendungen als unzureichend empfunden wird. So ist aus DE 10 2009 055 723 ein Verfahren zur Herstellung von Wärmedämmstoffformkörpern bekannt, bei dem über einen Hydrothermalprozess mit anschließendem Trocknen und Brennen Wärmedämmstoffformkörper auf Calciumaluminat-Basis erzeugt werden. Nachteilig bei dieser Vorgehensweise ist jedoch, dass die Prozesskette des Autoklavierens, Trocknens und Brennens sehr energieintensiv ist, was die Herstellung der Wärmedämmstoffformkörper verteuert.

Die Aufgabe der vorliegenden Erfindung besteht darin, einen Wärmedämmstoffformkörper mit hoher Feuerbeständigkeit, Resistenz in reduzierenden Gasumgebungen und Alkalibeständigkeit ohne die vorgenannten Nachteile zur Verfügung zu stellen. Insbesondere sollte der Wärmedämmstoffformkörper kostengünstig in der Herstellung sein.

Diese Aufgabe wird gelöst durch einen Wärmedämmstoffformkörper, erhältlich durch
- Erzeugen einer anorganischen Feststoffmischung aus einer anorganischen Erdalkalimetall-Verbindung, mindestens einer anorganischen Aluminium-Verbindung und wenigstens einem Porenbildner und Wasser, wobei das molare Verhältnis der Erdalkalimetall-Verbindung zu der Aluminium-Verbindung bezogen auf das Endprodukt 3:1 bis 1:6 beträgt,
- Überführen der Mischung in eine Form und
- Aushärtenlassen zum Erhalt eines Grünlings und Brennen des Grünlings bei einer Temperatur von wenigstens 1200°C.

Zur Verbesserung der Verarbeitbarkeit und des Abbindevermögens sind vorteilhaft Zusätze wie Plastifikatoren und Abbindebeschleuniger einzusetzen.

Der Erfindung liegt dabei die Erkenntnis zugrunde, dass ein im Wesentlichen auf Erdalkalimetall- und Aluminiumverbindungen basierender Wärmedämmstoffformkörper dadurch erhältlich ist, dass die vorgenannten anorganischen Komponenten zunächst mit Wasser und einem Porenbildner vermischt werden und diese Mischung in eine Form eingebracht und dort zur Aushärtung gebracht werden kann, ohne dass es hierfür eines energieträchtigen Hydrothermalverfahrens in einem Autoklaven bedürfte. Zudem ist zur Herstellung der erfindungsgemäßen Wärmedämmstoffformkörper ein zu einem Autoklavierprozess deutlich verringerter apparativer Aufwand erforderlich. So genügt für die Herstellung der erfindungsgemäßen Wärmedämmstoffformkörper bereits eine Rührapparatur und entsprechende Formen, in welche die als Zwischenprodukt erhaltene Mischung, die auch als Gießschlicker bezeichnet wird, eingebracht wird.

Erfindungsgemäß ist vorgesehen, dass der als Zwischenprodukt erhaltene Grünling bei einer Temperatur von wenigstens 1200 °C gebrannt wird. Bei dieser Temperatur finden neben der Wasserentfernung unter anderem Sinterprozesse innerhalb des Grünlings statt, die dem Wärmedämmstoffformkörper eine feste Struktur verleihen. Zudem führt diese hohe Temperatur dazu, dass im Grünling enthaltene Porenbildner verbrennen und an ihrer ursprünglichen Position einen Hohlraum hinterlassen. Hierfür sind beispielsweise geschäumte Polystyrolkugeln, Cellulose oder Sägemehl verwendbar. Weiter bevorzugt ist es jedoch, den Grünling bei einer Temperatur von wenigstens 1300°C zu brennen, insbesondere bei 1300 bis 2000 °C, vorzugsweise bei 1350 bis 2000 °C, weiter bevorzugt bei 1400 bis 2000 °C, besonders bevorzugt bei 1500 bis 2000°C. Diese bevorzugten Brenntemperaturen sind deshalb von Vorteil, weil sich bei diesen im Falle der Verwendung von Calcium als Erdalkalimetall und Aluminiumoxid stabile stöchiometrische Phasen bilden. Hierbei sind insbesondere die folgenden zu nennen, wobei hinter jeder Formel die entsprechende Schmelztemperatur angegeben ist:
C₃A (3 CaO x Al₂O₃) 1542 °C
C₁₂A₇ (12 CaO x 7 Al₂O₃) 1392 °C
CA (CaO x Al₂O₃) 1605°C
CA₂ (CaO x 2 Al₂O₃) 1765 °C
CA₆ (CaO x 6 Al₂O₃) 1860 °C

Ist eine besonders hohe Temperaturstabilität des Wärmedämmstoffformkörpers gewünscht, ist es von Vorteil, die Temperatur beim Brennen auf einen Bereich von wenigstens 1500°C einzustellen, beispielsweise auf den Bereich von 1500 bis 1800°C. Dies ist deshalb von Vorteil, weil sich bei diesen Temperaturen die stöchiometrischen Phasen C₃A, CA, CA₂ sowie CA₆ bilden und der Anteil der Phase C₁₂A₇ geringer ist, was sich positiv auf die Temperaturstabilität des Wärmedämmstoffformkörpers auswirkt.

Beim Brennen bzw. Sintern des Grünlings kann auf an sich bekannte Weise verfahren werden, wobei der Grünling bei den vorgenannten Temperaturen für wenigstens 3 h gebrannt ist, insbesondere für wenigstens 4 h, wobei die Brenndauer bevorzugt wenigstens 2 h pro cm Dicke des Grünlings beträgt, besonders bevorzugt wenigstens 3 h pro cm Dicke des Grünlings.

Im Rahmen der vorliegenden Erfindung kann in der Weise vorgegangen werden, dass der Grünling unmittelbar nach dem Aushärten aus der Form entnommen und dem Brennprozess zugeführt wird. Alternativ ist es ebenso möglich, vor dem Brennen des Grünlings einen Trocknungsschritt einzufügen, wobei eine Trocknungstemperatur von 80 bis 120°C zweckmäßig ist, insbesondere etwa 105°C.

Im Rahmen der vorliegenden Erfindung ist vorgesehen, dass die anorganischen Feststoffe frei von Silikaten sind.

Als Erdalkalimetall-Verbindung kommen beispielsweise Erdalkalimetall-Oxide, Hydroxyde, Carbonate, Hydrogencarbonate, Sulfate und andere thermisch zersetzbaren Verbindungen von Calcium und/oder Magnesium in Frage. Bevorzugt sind solche Erdalkalimetall-Verbindungen, die in Kombination mit Wasser abbinden können. In besonders bevorzugter Ausgestaltung des erfindungsgemäßen Wärmedämmstoffformkörpers handelt es sich bei der anorganischen Erdalkalimetall-Verbindung um ein Calciumsulfat. Ein besonders bevorzugtes Calciumsulfat ist Calciumsulfat-Halbhydrat und/ oder Anhydrit, wobei auch Calciumsulfat-Dihydrat oder jedwede Kombination der genannten Stoffe in vorteilhafter Weise eingesetzt werden kann. Die Verwendung von Calciumsulfat, insbesondere in Form der vorgenannten Formen, ist besonders von Vorteil, da diese beim Einrühren bzw. Vermischen mit Wasser zügig abbinden. Auf diese Weise wird der Formgebungsprozess des Grünlings deutlich beschleunigt. So kann beispielsweise technisches Aluminiumoxid mit Calciumsulfat-Halbhydrat und Wasser vermengt und in Formen eingegossen werden, worin je nach Menge und Art des verwendeten Calciumsulfats ein formstabiler Grünling bereits nach etwa 10 bis 60 Minuten erhalten wird, der daraufhin aus der Form entnommen werden kann. Auf diese Weise wird der gesamte Produktionsprozess der erfindungsgemäße Wärmedämmstoffformkörper beschleunigt. Zudem muss aufgrund der kurzen Abbindezeit eine geringere Anzahl an Formen vorgehalten werden, um eine vorgegebene Stückzahl pro Zeiteinheit herstellen zu können.

Was die anorganische Aluminiumverbindung betrifft, so können hierfür vorzugsweise Aluminiumoxid Al₂O₃ und/ oder ein Aluminiumoxid-Hydrat wie Aluminiumhydroxid Al(OH)₃, genannt Gibbsit, und/ oder Böhmit, AlO (OH) in verschiedenen Korngrößen verwendet werden, wobei die anorganische Aluminium-Verbindung aus den vorgenannten Verbindungen besteht oder diese zumindest enthält. Weiter bevorzugt ist es, dass der Gehalt an reinem Aluminiumoxid in der wasserfreien anorganischen Aluminium-Verbindung insbesondere wenigstens 98 Gew.-% beträgt, bevorzugt wenigstens 99 Gew.-%. Mit anderen Worten kann zur Herstellung der erfindungsgemäßen Wärmedämmstoffformkörper Tonerde (Aluminiumoxid) beziehungsweise Tonerdehydrat (Aluminiumoxid-Hydrat) technischer Reinheit oder ein anderes Aluminiumoxid-Mineral verwendet werden.

Weiterhin ist es von Vorteil, dass das molare Verhältnis der Erdalkalimetall-Verbindung zu der Aluminium-Verbindung bezogen auf Erdalkalimetall und Aluminium 1,5:1 bis 1:12 beträgt. Diese Verhältnisse sind besonders von Vorteil, da auf diese Weise die Ausbildung der vorstehend genannten stöchiometrischen Phasen des Stoffsystems Calciumoxid-Aluminiumoxid begünstigt wird. Innerhalb dieses Bereiches kann es weiterhin bevorzugt sein, das stöchiometrische Verhältnis von Calcium zu Aluminium auf eines der vorgenannten stöchiometrischen Phasen einzustellen, die eine hohe Temperaturstabilität besitzen. Dies bedeutet, dass das Verhältnis zwischen Calcium und Aluminium insbesondere bei etwa 1,5:1; 1:2; 1:4 oder 1:12 liegt.

Bei der Erzeugung des erfindungsgemäßen Wärmedämmstoffformkörpers ist vorgesehen, die anorganischen Feststoffe mit Wasser zu vermischen. Bevorzugt ist es hierbei, dass das anorganische Bindemittel mit Wasser im Verhältnis von 1:1 bis 2:1 gemischt ist.

Die Reihenfolge der Zugabe der Einzelkomponenten der Mischung ist im Prinzip beliebig, wobei es jedoch von Vorteil ist, dass die Mischung durch Vorlegen von Wasser und Zugabe der anorganischen Aluminium-Verbindung und des Porenbildners unter Rühren sowie anschließender Zugabe der anorganischen Erdalkalimetall-Verbindung unter Rühren erzeugt ist. Bei dieser Vorgehensweise können zunächst die nicht bzw. kaum mit Wasser reagierenden Substanzen, wie die anorganische Aluminiumverbindung und der Porenbildner gleichmäßig mit Wasser zu einer Slurry vermengt werden. Werden beispielsweise Tenside als Porenbildner eingesetzt, kann bei diesem Fertigungsschritt außerdem noch Luft unter die Mischung geschlagen werden, was typischerweise durch heftiges Rühren und/ oder auch Einblasen von Luft oder anderen Gasen unterstützt werden kann. Bei der anschließenden Zugabe der anorganischen Erdalkalimetall-Verbindung, insbesondere der bevorzugten Calciumsulfate, setzt der Abbindevorgang ein, so dass aufgrund der vorherigen sorgfältigen Vermischung von Aluminiumoxid und Porenbildner nunmehr lediglich die vollständige Vermengung des Calciumsulfats abgewartet werden muss, bevor diese Mischung in die Form für den Grünling eingebracht werden kann. Die nachfolgende Zugabe der anorganischen Erdalkalimetall-Verbindung, insbesondere in Form der vorgenannten Calciumsulfate, ist speziell dann von Vorteil, wenn aufgrund deren Art und Menge die Abbindezeit der Mischung im Bereich von 10 bis 20 Minuten liegt, da ansonsten die Mischung beginnen könnte abzubinden, obwohl die Komponenten noch nicht gleichmäßig mit Wasser vermischt sind.

Erfindungsgemäß ist vorgesehen, dass bei der Herstellung des Wärmedämmstoffformkörpers ein Porenbildner eingesetzt wird. Hierfür kommen im Prinzip sämtliche für diesen Zweck an sich bekannte Materialien in Betracht. So kann der Porenbildner beispielsweise ausgewählt sein aus anorganischen Schäumungsmitteln, wie Tensiden, Sägemehl, Korkmehl, geschäumten Polymerteilchen, insbesondere Polystyrol-Kugeln, Hohlkugel aus Keramik, Kunststoff und dergleichen, Cellulose oder Mischungen von diesen.

Der Porenbildner wird in typischen Mengen verwendet, die in gewissem Maße von der Art des Porenbildners abhängen. Die Mischung aus anorganischen Feststoffen und Porenbildner kann beispielsweise 0,1 bis 30 Gew.-% an Porenbildner enthalten, insbesondere 0,1 bis 10 Gew.-%.

In weiterer Ausgestaltung des erfindungsgemäßen Wärmedämmstoffformkörpers enthält dieser nach dem Brennen Calciumaluminat oder besteht hieraus, wobei das Calciumaluminat vorliegt als [3 Ca x Al₂O₃], [12 Ca x 7 Al₂O₃], [Ca x Al₂O₃] [Ca x 2 Al₂O₃], [Ca x 6 Al₂O₃] oder Mischungen von diesen, wobei das Calciumaluminat insbesondere vorliegt als [3 Ca x Al₂O₃], [Ca x Al₂O₃], [Ca x 2 Al₂O₃], [Ca x 6 Al₂O₃] oder Mischungen von diesen, da diese besonders temperaturbeständig sind.

Ein weiterer Gegenstand der vorliegenden Erfindung betrifft einen Feuerleichtstein, der aus einem Wärmedämmstoffformkörper der vorliegenden Erfindung besteht oder hieraus erhältlich ist. Der Feuerleichtstein kann insbesondere durch Heraustrennen einer gewünschten Form aus dem Wärmedämmstoffformkörper hergestellt werden. Der Formgebung sind hier im Prinzip keine Grenzen gesetzt. So kann der Feuerleichtstein beispielsweise auch eine plattenförmige Ausgestaltung besitzen, wie sie zur Innenverkleidung von Öfen und dergleichen verwendet wird.

Bei der Herstellung eines erfindungsgemäßen Wärmedämmstoffformkörpers wird in vorteilhafterweise derart verfahren, dass zunächst Wasser in einem Chargenmischer mit regulierbarer Drehzahl vorgelegt und die anorganischen Aluminium-Verbindungen sowie der Porenbildner und Zusätze wie Plastifikatoren und Abbindebeschleuniger unter Rühren hinzugegeben werden. Nachdem diese Substanzen homogen miteinander vermischt sind, erfolgt die Zugabe der anorganischen Erdalkalimetall-Verbindungen. Die Mischzeit wird dann beendet, wenn optisch eine vollständige Homogenität des Gießschlickers erreicht ist.

Der Gießschlicker wird anschließend in Formen abgegossen, worin er aushärtet. Je nach Art der Zusammensetzung erfolgt die Aushärtung innerhalb von 10 bis 60 Minuten. Die dabei entstehenden Grünlinge sind insoweit formstabil, dass sie nach der vorgenannten Zeit aus den Formen entnommen werden können. Die Grünlinge können entweder direkt dem Brennprozess zugeführt werden, wobei sie jedoch vorzugsweise zunächst bei einer Temperatur von beispielsweise 105 °C vorgetrocknet werden.

Nach dem Brennen der Grünlinge wird der hierbei erhaltene Wärmedämmstoffformkörper aus dem Ofen entnommen und auf Raumtemperatur abgekühlt. Anschließend kann dieser auf beliebige Maße zugeschnitten werden.

Die Erfindung wird im Folgenden anhand von vier Ausführungsbeispielen näher erläutert:

### Beispiel 1

| | |
|---|---|
| Tonerde techn. | 516 g |
| Tonerdehydrat | 526 g |
| Halbhydrat techn. (Gips) | 360 g |
| Cellulose | 20 g |
| organ. Schaum | 200 cm³ |
| Wasser | 1200 ml |

In 800 ml Wasservorlage werden Cellulose, Tonerde und Tonerdehydrat, vorzugsweise Aluminiumhydroxyd, zu einer homogenen Slurry vermischt, bevor die Zugabe des organischen Schaums erfolgt. Nach dessen Homogenisierung wird im letzten Schritt die vorbereitete Gips/Wasser-Mischung (360 g/400 ml) zugegeben und die Mischung in ca. drei min. fertiggemischt. Die Mischung wird in eine vorbereitete Form angegossen und der verfestigte Grünling kann nach einer Standzeit von 30 min. entformt werden.

Der Grünling wird bei 105°C in 20 h getrocknet und dann bei 1500°C mit 3 h Haltezeit gebrannt.

Die resultierenden Kennwerte des Wärmedämmstoffformkörpers sind:

| | | |
|---|---|---|
| Rohdichte | 580 kg/m³ | |
| Kaltdruckfestigkeit | 0,5 N/mm² | |
| Wärmeleitfähigkeit | 0,40 W/mK | |
| Phasengehalt | CA6 | 31 % |
| | CA2 | 34 % |
| | CA | 9 % |
| | Korund | 19 % |

### Beispiel 2

| | |
|---|---|
| Tonerde techn. | 516 g |
| Tonerdehydrat | 526 g |
| Halbhydrat techn. (Gips) | 360 g |
| Cellulose | 10 g |
| Plastifikator | 1 g |
| Abbindebeschleuniger | 7 g |
| organ. Schaum | 200 cm³ |
| Wasser | 1200 ml |

Verfahrensweise wie Beispiel 1. Die Zugabe des Plastifikators und der Abbindebeschleuniger erfolgen im ersten Mischschritt. Es kann schon nach 15 min. entformt werden. Der Brand erfolgt bei 1550°C/4h.

Werte:

| | | |
|---|---|---|
| Rohdichte | 650 kg/m³ | |
| Kaltdruckfestigkeit | 1,5 N/mm² | |
| Wärmeleitfähigkeit | 0,42 W/mK | |
| Phasengehalt | CA6 | 55 % |
| | CA2 | 34 % |
| | CA | 5 % |
| | Korund | 3 % |

### Beispiel 3

| | |
|---|---|
| Tonerde techn. | 646 g |
| Tonerdehydrat | 658 g |
| Halbhydrat techn.(Gips) | 256 g |
| Cellulose | 6,5 g |
| organ. Schaum | 196 ml |
| Wasser | 1170 g |

Verfahrensweise wie Beispiel 1. Brenntemperatur 1550 °C.

### Kennwerte:

| | | |
|---|---|---|
| Rohdichte | 700 kg/m³ | |
| Kaltdruckfestigkeit | 1,6 N/mm² | |
| Wärmeleitfähigkeit | 0,43 W/mK | |
| Phasengehalt | CA₆ | 58 % |
| | CA₂ | 31 % |
| | CA | 4 % |
| | Korund | 2 % |
| Druckerweichen t_{0,5} | 1445 °C | |

### Beispiel 4

| | |
|---|---|
| Tonerde techn. | 646 g |
| Tonerdehydrat | 658 g |
| Halbhydrat techn.(Gips) | 256 g |
| Cellulose | 6,5 g |
| organ. Schaum | 200 ml |
| Wasser | 855 g |

Verfahrensweise wie Beispiel 1, aber dann unterschiedlich gebrannt. Brenntemperatur 1400 °C, 1500 °C, 1550 °C, 1600 °C.

### Kennwerte:

| | | | | | |
|---|---|---|---|---|---|
| Rohdichte | | 800 kg/m³ | 850 kg/m³ | 880 kg/m³ | 890 kg/m³ |
| Kaltdruckfestigkeit | | 3,2 N/mm² | 3,5 N/mm² | 4,7 N/mm² | 5,2 N/mm² |
| Wärmeleitfähigkeit | | 0,42 W/mK | 0,45 W/mK | 0,46 W/mK | 0,46 W/mK |
| Phasengehalt | CA₆ | 8 % | 35 % | 60 % | 80 % |
| | CA₂ | 7 % | 30 % | 30 % | 10 % |
| | CA | 12 % | 10 % | 3 % | 2 % |
| | Korund | 25 % | 20 % | 3 % | 12 % |
| Druckerweichen t_{o,5} | | 1350 °C | 1475 °C | 1511 °C | 1545 °C |

## Patentansprüche

1. Wärmedämmstoffformkörper, erhältlich durch
- Erzeugen einer anorganischen Feststoffmischung aus einer anorganischen Erdalkalimetall-Verbindung, mindestens einer anorganischen Aluminium-Verbindung und wenigstens einem Porenbildner und Wasser, wobei das molare Verhältnis der Erdalkalimetall-Verbindung zu der Aluminium-Verbindung bezogen auf das Endprodukt 3:1 bis 1:6 beträgt,
- Überführen der Mischung in eine Form und
- Aushärtenlassen zum Erhalt eines Grünlings und Brennen des Grünlings bei einer Temperatur von wenigstens 1200 °C.

2. Wärmedämmstoffformkörper nach Anspruch 1,
**dadurch gekennzeichnet,**
**dass** der Grünling bei einer Temperatur von wenigstens 1300 °C gebrannt ist, insbesondere bei 1300 bis 2000 °C, vorzugsweise bei 1350 bis 2000 °C, weiter bevorzugt bei 1400 bis 2000 °C, besonders bevorzugt bei 1500 bis 2000 °C.

3. Wärmedämmstoffformkörper nach Anspruch 1 oder 2,
**dadurch gekennzeichnet,**
**dass** der Grünling bei der angegebenen Temperatur für wenigstens 3 h gebrannt ist, insbesondere für wenigstens 4 h, wobei die Brenndauer bevorzugt wenigstens 2 h pro cm Dicke des Grünlings beträgt, besonders bevorzugt wenigstens 3 h pro cm Dicke des Grünlings.

4. Wärmedämmstoffformkörper nach einem der vorstehenden Ansprüche,
**dadurch gekennzeichnet,**
**dass** der Grünling vor dem Brennen getrocknet ist, insbesondere bei einer Temperatur von 80 bis 120 °C.

5. Wärmedämmstoffformkörper nach einem der vorstehenden Ansprüche,
**dadurch gekennzeichnet,**
**dass** die anorganische Erdalkalimetall-Verbindung ein Calciumsulfat ist, insbesondere Calciumsulfat-Halbhydrat.

6. Wärmedämmstoffformkörper nach einem der vorstehenden Ansprüche,
**dadurch gekennzeichnet,**
**dass** die anorganische Aluminium-Verbindung Aluminiumoxid und/ oder Aluminiumoxid-Hydrat enthält oder hieraus besteht, wobei der Gehalt an Aluminiumoxid in der kristallwasserfreien anorganischen Aluminium-Verbindung insbesondere wenigstens 98 Gew.-% beträgt, bevorzugt wenigstens 99 Gew.-%.

7. Wärmedämmstoffformkörper nach einem der vorstehenden Ansprüche,
**dadurch gekennzeichnet,**
**dass** das molare Verhältnis der Erdalkalimetall-Verbindung zu der Aluminium-Verbindung bezogen auf Erdalkalimetall und Aluminium 1,5 : 1 bis 1 : 12 beträgt

8. Wärmedämmstoffformkörper nach einem der vorstehenden Ansprüche,
**dadurch gekennzeichnet,**
**dass** die anorganischen Feststoffe mit Wasser im Verhältnis von 1:1 bis 2:1 gemischt sind.

9. Wärmedämmstoffformkörper nach einem der vorstehenden Ansprüche,
**dadurch gekennzeichnet,**
**dass** die Mischung durch Vorlegen von Wasser und Zugabe der anorganischen Aluminium-Verbindung und des Porenbildners unter Rühren sowie anschließender Zugabe der anorganischen Erdalkalimetall-Verbindung unter Rühren erzeugt ist.

10. Wärmedämmstoffformkörper nach einem der vorstehenden Ansprüche,
**dadurch gekennzeichnet,**
**dass** der Porenbildner ausgewählt ist aus organischen Schäumungsmitteln wie Tensiden, Sägemehl, Korkmehl, geschäumten Polymerteilchen, insbesondere Polystyrol-Kugeln, Hohlkugel, insbesondere Mikrohohlkugeln aus Glas, Keramik, Kunststoff und dergleichen, Cellulose oder Mischungen von diesen.

11. Wärmedämmstoffformkörper nach einem der vorstehenden Ansprüche,
**dadurch gekennzeichnet,**
**dass** die Mischung aus anorganischen Feststoffen und Porenbildner 0,1 bis 30 Gew.-% an Porenbildner enthält, insbesondere 0,1 bis 10 Gew.-%.

12. Wärmedämmstoffformkörper nach einem der vorstehenden Ansprüche,
**dadurch gekennzeichnet,**
**dass** der Wärmedämmstoffformkörper nach dem Brennen Calciumaluminat enthält oder hieraus besteht, wobei das Calciumaluminat vorliegt als [3 Ca x Al₂O₃], [12 Ca x 7 Al₂O₃], [Ca x Al₂O₃], [Ca x 2 Al₂O₃], [Ca x 6 Al₂O₃] oder Mischungen von diesen, wobei das Calciumaluminat insbesondere vorliegt als [3 Ca x Al₂O₃], [Ca x Al₂O₃], [Ca x 2 Al₂O₃], [Ca x 6 Al₂O₃] oder Mischungen von diesen.

13. Feuerleichtstein, bestehend oder erhältlich aus einem Wärmedämmstoffformkörper nach einem der Ansprüche 1 bis 13, wobei der Feuerleichtstein insbesondere durch Heraustrennen einer gewünschten Form aus dem Wärmedämmstoffformkörper erhältlich ist.
